# EUROPEAN PATENT SPECIFICATION

(11) **EP 2 310 907 B1**
(45) Date of publication and mention of the grant of the patent: **20.09.2017**
(21) Application number: 09803512.4
(22) Date of filing: 28.07.2009
(51) Int. Cl.: G02F 1/15, B64C 1/14

(54) **CONDUCTIVE MULTILAYER STACK**
LEITFÄHIGER MEHRSCHICHTIGER STAPEL
EMPILEMENT MULTICOUCHE CONDUCTEUR

(30) Priority: 31.07.2008 US 137643 P; 25.09.2008 US 238069
(43) Date of publication of application: 20.04.2011
(73) Proprietor: PPG Industries Ohio, Inc., Pittsburgh, PA 15272 (US)
(72) Inventor: BIMANAND, Alexander, Burbank CA 91502 (US); MARISCAL, Jose, Quart Hill CA 93536 (US); UPRETY Krishna K., Valencia CA 91354 (US)
(74) Representative: HGF Limited
(86) International application number: PCT/US2009/052015
(87) International publication number: WO 2010/014648

(56) References cited:
- US-A- 4 465 736
- US-A- 5 780 160
- US-A- 5 780 160
- US-A- 5 859 722
- US-A- 5 859 722
- US-A1- 2007 002 421
- US-A1- 2007 002 421
- US-A1- 2007 224 340
- US-A1- 2007 249 088
- US-A1- 2008 073 622
- US-A1- 2008 073 622

## Description

### FIELD OF INVENTION

This invention relates generally to transparent compositions and coated transparencies and laminates incorporating such compositions. More particularly, the invention relates to an electrically conductive coating stack having anti-static or static-dissipative properties.

### BACKGROUND OF THE INVENTION

Modem jet aircraft canopies, such as F-22 stealth fighter canopies, are made of polymeric materials. Such materials are preferred because of their light weight, high strength, and ease of shaping. However, most polymeric materials are not infrared-reflective and do not meet the requirements for stealth jet fighters, such as low surface resistance (high electrical conductivity) and the ability to withstand extreme weather conditions. As a result, both organic and inorganic coatings are employed to impart infrared reflection, conductivity, and other necessary stealth characteristics to the canopy.

Canopies for stealth jet fighters need to be electrically conductive so that they can drain or dissipate static electricity. A low surface resistance is desired to prevent a buildup of static charge, because static charge interferes with various electromagnetic field and radar attenuation functions of the aircraft.

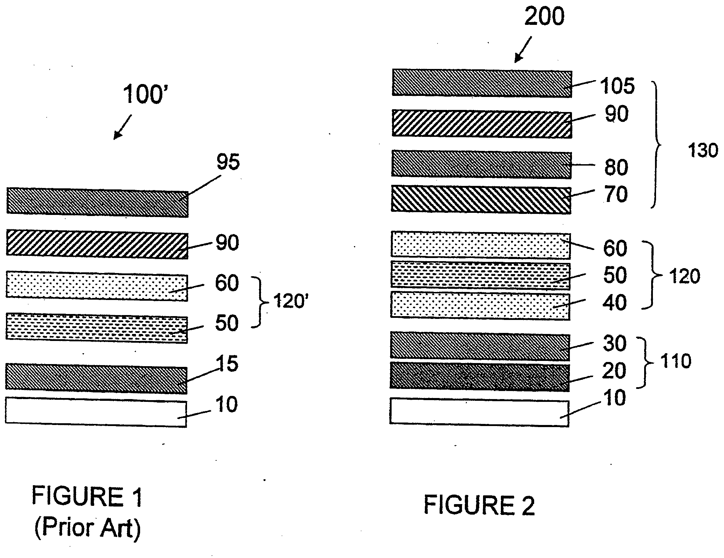

FIG. 1 illustrates a conventional multilayer stack for a modem aircraft canopy. The multilayer stack 100' generally includes a substrate base layer 15, a metal conductive layer 120' (including a metal layer 50 and a metal oxide layer 60), a tie layer 90, and a top coat 95. The substrate base layer 15 provides adhesion between the metal conductive layer 120' and an aircraft canopy substrate 10 that lies underneath. In addition, the substrate base layer 15 covers imperfections such as scratches or dents that may exist on the surface of the substrate 10. Suitable materials that can be used for the substrate base layer 15 include UV-curable polymers such as acrylates.

The metal conductive layer 120' includes a silver layer 50 and a layer of indium tin oxide (ITO) 60 and helps dissipate static charge that can develop during flight and/or from lightning strikes. In addition, the metal conductive layer 120' provides for electromagnetic interference (EMI) shielding and radar attenuation. Since the metal conductive layer 120' is prone to oxidation and degradation upon exposure to moisture, the top coat 95 is typically made of a hydrophobic polymer such as polyurethane and is sufficiently durable and flexible to withstand the thermal contraction and expansion caused by extreme temperature conditions encountered during flight.

While the prior art multilayer stack provides adequate infrared reflection, EMP protection, and radar attenuation to the canopy, its service life is limited due to delamination and the formation of blue spots on the multilayer stack. In some aircraft, dark blue spots and signs of delamination are observed after only 25 hours of service, and it is not unusual for the entire canopy to be replaced after 80 hours of service because of severe delamination and blue spot formation. The blue spots result from oxidation of the silver layer 50. As moisture penetrates through the top coat 95, it reaches the silver layer 50 and causes it to corrode. US 2007/002421A1 relates to aircraft window transparencies comprising a first electrically conductive coating over at least a portion thereof and a plastic second transparent substrate having a second electrically conductive coating over at least a portion thereof. The second electrically conductive coating comprises a metal layer between first and second metal oxide layers.

Despite the advances made to date in aircraft canopy coatings, a need still remains for electrically conductive coating stacks having greater durability and functionality.

### SUMMARY OF THE INVENTION

The invention provides an electrically conductive multilayer stack as defined in claim 1. In some embodiments, an electrically conductive multilayer stack having good IR reflection, EMP protection, radar attenuation, static discharge, weather resistance, and chemical stability is provided. Conceptually, the multilayer stack can be divided into three parts: a coated substrate; a conductive primary stack; and a protective secondary stack. Together, the coated substrate and conductive primary stack are similar to the multilayer stack shown in FIG. 1 , with important differences noted herein. Together with the protective secondary stack, the three parts form an enhanced multilayer stack having greater durability and functionality.

In one embodiment of the invention, a multilayer stack comprises a coated substrate, which includes a substrate (e.g., an aircraft canopy), a tie layer, and a base layer; a primary conductive layer, including first and second metal oxide layers with a metal layer sandwiched in between; and a protective stack, including a tie layer, a barrier layer, another tie layer, and a conductive topcoat or top layer. The conductive primary stack helps protect against lightning strikes. It also shields the substrate from electromagnetic interference (EMI) and provides radar attenuation. The multilayer stack generally has better conductivity and adhesion to a substrate.

In other embodiments of the invention, the outer protective stack is varied in a number of ways. For example, in addition to the topcoat being conductive, one or more additional layers of the outer protective stack layers can be compounded with a conductive salt, metal oxide, or inherently conductive polymer (ICP).

### BRIEF DESCRIPTION OF THE DRAWINGS

The accompanying drawings, together with the specification, illustrate various aspects and embodiments of the invention.
FIG. 1 is an exploded, cross-sectional view of a conventional multilayer stack for an aircraft canopy;
FIG. 2 is an exploded, cross-sectional view of a multilayer stack according to an embodiment of the present invention; and
FIG. 3-5 are exploded, cross-sectional views of multilayer stacks according to various alternate embodiments of the present invention.

### DETAILED DESCRIPTION OF THE INVENTION

In the following description and in the claims, various layers are described as being "positioned over," "disposed over," or "on" one or more additional layers, and this language simply denotes the relative positions of the layers. Thus, in some embodiments, two adjacent layers are literally right next to each other, while in other embodiments, the same two layers are separated by one or more additional layer(s). In each case, one of the two layers is considered to be "positioned over," "disposed over" or "on" the other layer.

As used herein, the term "coated substrate" refers to a substrate that has been protected (e.g., coated) with one or more layer(s) of metal particles and/or metal oxide to make the substrate conductive. The substrate can be made of glass or plastic, coated or uncoated, and may form a window, a windshield of a car, aircraft, or boat, a building, or another structure.

When various compositions are described, it is to be understood that the stated percentage or amount of each ingredient is provided on a "wet" basis prior to drying or curing, unless specified otherwise. Unless otherwise noted, the percentages are weight percentages (wt%).

Throughout the text and the claims, use of the word "about" in relation to a range of values (e.g., "about 22 to 35 wt%") is intended to modify both the high and low values recited, and reflects the penumbra of variation associated with measurement, significant figures, and interchangeability, all as understood by a person having ordinary skill in the art to which this invention pertains.

A multilayer stack according to one embodiment of the invention is shown in FIG. 2. The multilayer stack 200 is built up on an aircraft canopy or other substrate 10 and includes three main features: the coated substrate 110, a primary conductive layer or stack 120, and a secondary protective stack 130, each of which is comprised of a number of sublayers that perform one or more functions. The coated substrate includes the aircraft canopy or other substrate 10, an intermediate tie layer 20, and a polymeric base layer 30, each positioned on or over an adjacent layer in the order shown.

Positioned over the coated substrate 110 is the primary conductive layer or stack 120, which includes first and second metal oxide layers 40 and 60 and a conductive metal layer 50 sandwiched there between. The metal layer 50 provides IR reflection, and radar attenuation properties of the multilayer stack. The first and second metal oxide layers 40 and 60 protect the metal layer and help bind it between adjacent polymeric layers of the coated substrate 110 and the secondary protective stack 130.

Positioned over the second metal oxide layer 60 of the primary conductive stack 120 is a secondary protective stack 130, comprised of two tie layers 70 and 90, a barrier layer 80, and a conductive top layer or topcoat 105. The barrier layer 80 prevents moisture from intruding into the primary conductive stack 120. The tie layers improve the bond between the barrier layer and the adjacent metal oxide layer and the top coat.

The topcoat or top layer 105 is the outer most layer of the multilayer stack 200, and is made of a tough, durable and weather resistant material, yet is sufficiently pliable and flexible to prevent crack formation due to thermal stress. It is conductive and helps dissipate static charge and other electromagnetic forces.

The multilayer stack 200 provides all the functionality required of a modem stealth aircraft canopy, including radar attenuation, IR reflection, EMI and EMP protection, protection from lightning strikes, weather resistance, and durability. The individual layers that comprise the multilayer stack will now be described.

The coated substrate 110 includes the substrate 10, a tie layer 20, and a base layer 30. In the case of a modem aircraft canopy, the substrate is typically an organic resin such as polycarbonate or polyacrylate. Hence, the tie layer and base layer are selected to adhere well to such a material. In addition, the base layer 30 couples the canopy to the primary conductive stack 120, and should be capable of bonding thereto. Accordingly, in one embodiment of the invention, the base layer 30 comprises a long chain organopolysiloxane, optionally compounded with a low molecular weight coupling agent such as a silane or siloxane, which improves the adhesion between the base layer 30 and the innermost metal oxide layer 40 of the primary conductive stack 120. Alternatively, the base layer 30 is a thermally-curable polyacrylate coated with an organopolysiloxane.

In the case where the substrate is a polyacrylate, polycarbonate, or similar organic resin, the tie layer 20 can be an acrylic polymer or mixture of polymers, for example an acrylic polymer made of one or more alkyl acrylates and/or methacrylates, optionally compounded with one or more additional monomers. The layer can be applied to the substrate by gravity coating or another suitable application technique. In gravity coating, a polymeric solution of the tie layer polymer(s) or precursor monomers is prepared, and the solution is applied to the canopy in the center and along a longitudinal axis that extends along the entire length of the canopy. The polymeric solution is then discharged from a nozzle and poured over the canopy at the top, allowing the solution to flow down both sides and thereby coat the surface of the canopy. The solution is applied slowly from one end to another along the longitudinal axis of the canopy, until the entire canopy is coated with a tie layer. Since the coating is formed by gravity, the coating thickness can be controlled by the viscosity of the polymeric solution. An excess of polymeric solution can be used to ensure a consistent layer is formed across the entire canopy. Any excess drips off the canopy and is collected at the bottom, where it can be properly disposed of and/or re-used.

In another embodiment, multiple streams of the polymeric solution are directed to impinge on the canopy. The solution streams are ejected through one or more nozzles or other outlets, and the polymeric solution is kept at a constant viscosity to control the coating thickness. If the viscosity is too low, insufficient coating can occur, whereas, if the polymeric solution viscosity is too high, the resulting tie layer coating can be unnecessary thick, with a consequent increase in cost and weight.

Once the canopy is coated with the tie layer material(s), it is air dried, under atmospheric conditions and ambient temperatures, and then cured using heat or ultraviolet light.

After the tie layer 20 is applied to the substrate 10 and cured, the base layer 30 is applied by gravity coating or a process similar to that described above. The coated substrate 110 is then allowed to air dry under ambient conditions, and then cured.

The primary conductive stack 120 includes metal oxide layers 40 and 60, with a metal layer 50 sandwiched in between. Non-limiting examples of suitable metal oxides include indium tin oxide (ITO), titanium dioxide, zinc oxide, and zinc stannate. In one embodiment, an indium tin oxide contains about 10 weight percent tin. In general, the metal oxide should have low absorption, high refractive index, and good chemical durability. The resulting metal oxide layer is transparent and anti-reflective.

The metal oxide layer 40 is applied to the coated substrate 110 using a suitable deposition technique, such as physical vapor deposition or a sputtering process. In one embodiment, it is formed using a magnetron sputtering process in which a high voltage plasma discharge causes atoms to be ejected from a target, such as an indium tin alloy or indium tin oxide ceramic. The metal atoms then strike the coated substrate and form a thin, transparent layer of metal oxide. Since the coating is formed on an atomic scale, it is possible to produce uniform layers of films. For indium tin oxide, the metal oxide layer 40 can be applied at a relatively moderate temperature, i.e. from room temperature to about 170° F. The coated substrate 110 is heated to a temperature within that range, and a sufficiently thick layer is deposited thereon.

Once the first metal oxide layer 40 is applied, the intermediate metal layer 50 is applied using a physical vapor deposition or sputtering process as described above. In one embodiment, the metal is silver or a silver alloy, such as silver/palladium or silver/ gold. In one embodiment, a silver alloy containing 5-10 wt % palladium is used. In another embodiment, a silver/gold alloy containing about 20-60 wt % gold is used. For silver and its alloys, it can be advantageous to carry out the deposition process at a relatively low temperature in order to avoid unwanted oxidation of the metal, i.e., about 50° to 100°F.

After the metal layer 50 is deposited, the outermost metal oxide layer 60 is then applied, using a process similar to that described above. Optionally, an extra layer of titanium is sputtered on the metal layer 50 to enable the deposition process of the second metal oxide layer 60 to be carried out at a higher temperature. Titanium acts as oxygen scavenger and minimizes or eliminates oxygen in the vacuum chamber. This allows the second metal oxide layer to be deposited at a higher temperature and at a higher oxidation state without corroding or darkening the silver (e.g.) in the metal layer 50. This allows a thicker layer of metal oxide to be built up as the second metal oxide layer 60.

Optionally, one or more oxides, such as aluminum oxide and zirconium oxide, can be added as additional corrosion barriers, to allow a higher operating temperature during the deposition of the second metal oxide layer. This can actually reduce the coating thickness required of the hydrophobic barrier layer 80 and the secondary protective stack 130, or even eliminate the barrier layer 80 and tie layer 70 altogether.

After the primary conductive layer 120 is deposited on the coated substrate 110, a secondary protective stack 130 is formed thereon. As shown in FIG. 2, a secondary protective stack 130 according to one embodiment of the invention includes a first tie layer 70, a barrier layer 80, a second tie layer 90, and a top layer or topcoat 105. The barrier layer 80 is made of a hydrophobic material, for example, polyurethanes, fluorinated urethanes, fluoropolymers, fluoroelastomers, polyurethanes, polyolefins, polyamides, polyamines, halo polymers, ethylene propylene rubbers, epoxies, polyesters, and fluorosilicones, and protects the underlying primary conductive stack 120 from moisture and resulting corrosion. The tie layers 70 and 90 are selected to be compatible with the barrier layer 80 and the adjacent primary conductive layer 120 and topcoat 105, respectively. Thus, in one embodiment, the tie layer 70 comprises a polymeric resin that is compatible with the barrier layer 80 and optionally includes an organosiloxane compound, which can interact with and bond to the underlying outermost metal oxide layer 60 of the primary conductive stack 120. Similarly, the tie layer 90 can be made of a polymeric resin compatible with the topcoat 105, and may also include an organosiloxane compound.

Optionally, before applying the barrier layer 80, a primer coat is applied to improve adhesion between the barrier layer 80 and the tie layer 70. This can also reduce the time required to cure or dry the barrier layer 80, which can improve overall fabrication time of the multilayer stack 200. Suitable primers for this purpose include functional siloxanes, short chain polymerized siloxanes such as dimethylsiloxane, and long chain polysiloxanes. In one embodiment, the primer comprises 3-aminopropyltriethoxy silane mixed in isopropanol at a concentration of less than 2 wt%. It is also possible to include a secondary primer, more viscous than the first primer. The primer(s), as well as the tie layer 70 and 90 and the barrier layer 80, can be applied using gravity coating or another process as described above, or any other suitable technique that enables the multilayer stack 200 to be built up with a desired thickness of individual layers.

The outer layer of the secondary protective stack 130 comprises a conductive topcoat or top layer 105 made of a durable, weather resistant polymer having sufficient flexibility to retard crack formation due to thermal stress. Conductivity is achieved by compounding the top layer 105 with a conductive metal oxide, a quaternary ammonium salt, an inherently conductive polymer, or another suitable conductive agent. In a nonlimiting example, the polyurethane is formed from a diacetone alcohol solution of a polyol (e.g., Polyol 4295, commercially available from Reichhold Chemicals, Inc.), aliphatic polyisocyanate resin (e.g., Desmodur N-75, commercially available from Bayer), N-methylpyrrolidone ("NMP"), and a quaternary ammonium salt (e.g., Superstat 463, commercially available from AMCS, Inc.). A representative formulation contains about 25% solvent, 16% polyol, 24% aliphatic polyisocyanate, 7% NMP, and 23% quaternary ammonium salt, with small amounts of additional components, such as light stabilizers, polymerization catalyst, and surfactant.

A thin topcoat is desirable because it does not add weight to the canopy. On the other hand, a thick layer can provide enhanced protection to the underlying layers and may aid in dissipating static charge. The topcoat can be applied using gravity coating or a similar deposition technique as described above.

Quaternary ammonium salt concentration of about 22 wt % or higher are representative. At 22 wt%, the salt does not adversely affect topcoat weatherability or light transmission, and can improve the abrasion and rain erosion resistance of the top layer. A topcoat having a resistance less than about 10⁵ Ω/□ is desirable because it allows static charge to be dissipated without compromising the durability of the coating. In some embodiments, the concentration of the quaternary ammonium salt is increased until a surface resistance of 10⁹ Ω/□ or less is reached, i.e., from 22 to 35 wt%, or even as high as 60 wt%.

At a 60 wt% concentration, the quaternary ammonium salt is still bound within the polymeric matrix of the topcoat 105, but the layer may be undesirably tacky. This can be countered by including a surface additive, such as a silicone, to the topcoat formulation. Thus, in one embodiment, a silicone solution having functional groups that orient at the surface is used. Nonlimiting examples include silicone-modified polyacrylates and polyether-modified poly-dimethylsiloxane, available commercially as BYK^{®} 3720 or BYK^{®}-SILCLEAN 3700 from BYK Chemie. In one embodiment, a silicone additive such as BYK^{®}-SILCLEAN 3700 having hydroxyl functionality is incorporated in the topcoat 105. The polymeric groups of the silicone crosslink and become embedded within the polymeric matrix of the topcoat while the hydroxyl groups of the silicone migrate to the surface to react with the functional groups of the quaternary ammonium salts, thereby reducing the surface tackiness. The amount of silicone varies depending on the amounts of quaternary ammonium salt in the top layer 100. Representative, nonlimiting concentration values include trace amounts to as high as about 1 % by weight (dry weight), e.g. about 0.1 to about 0.3 dry wt%.

While BYK^{®} 3720 and BYK^{®}-SILCLEAN 3700 are both solvent-based additives, aqueous-based surface modifiers can be used in the alternative.

The surface tackiness problem can be alleviated in an alternative manner by changing the polymeric components that make up the topcoat 105, e.g., by using a more reactive polyol or a polymeric material with a lower equivalent weight. In this case, equivalent weight denotes the amount of reactive functional groups on the polymer chain. Its value corresponds to the weight of solid resin in grams that includes one mole of a functional reactive group attached to the polymer backbone. In other words, the lower the equivalent weight value the less material required to undergo crosslinking reactions through the functional groups. Polyol 4295 has an equivalent weight value of about 295. In one embodiment, Polyol 4295 is replaced with trimethylolpropane (TMP). TMP has three functional groups and has an equivalent weight value of 44.7. The three available functional groups are believed to increase the crosslink density, thereby decreasing or eliminating the surface tackiness. In some embodiments, about 20 to 100 wt% of the 4295 polyol is replaced with TMP.

In an alternate embodiment, topcoat surface tackiness is addressed by replacing the Polyol 4295 with ethylene glycol (EG), a short chain alkanol having two functional groups. It has an equivalent weight value of about 31. EG tends to be very reactive and can significantly reduce topcoat surface tackiness by increasing the crosslink density. In some embodiments, about 20 to 100 wt% of Polyol 4295 is replaced by EG.

In some embodiments, a polyethylene glycol (PEG 400) having an equivalent weight of about 198 is utilized to increase conductivity. The PEG is inherently bound in the polymeric matrix and has little or no tendency to migrate to the surface of the topcoat 105. In addition, PEG 400 is soluble in water and is conductive. PEG 400 increases the moisture retention of the topcoat because of its affinity for water. As a result, PEG 400 increases the inherent conductivity of the topcoat 105. PEG 400 also depresses the freezing point of water and hence improves conductivity at low temperatures.

Nonlimiting examples of alternate formulations include those in which about 20 to 100 wt%, or about 40 to 60 wt%, of the Polyol 4295 is replaced with PEG 400. All such embodiments produce good test results for haze and aesthetic appearance.

In another embodiment, 35 wt% of the quaternary ammonium salt and 40 wt% of Polyol 4295 is replaced with PEG 400. In yet another embodiment, about 45 to 50 wt% of the quaternary ammonium salt and all of the Polyol 4295 polyol in the topcoat 105 are replaced with PEG 400 and a small amount of non-reactive organic salt.

Although quaternary ammonium salts can be used at high amounts to improve the conductivity of the topcoat 105, their conductivity can be affected by low temperatures. At - 40°F or less there is almost no absorbable moisture and no moisture in the topcoat 105, and a quaternary ammonium salt may not be conductive under such conditions. Therefore, in some embodiments, topcoat conductivity is achieved by incorporating an alternate conductive agent, such as a non-reactive organic salt, a conductive metal oxide, or an inherently conductive polymer (ICP).

Thus, in one embodiment, the topcoat incorporates a non-reactive organic salt, such as 1-butyl-3-methylimidazollum methyl sulfonate, 1-butyl-3-methylimidazolium methyl sulfate, or 1-butyl-3-methylimidazolium ethyl sulfate into the topcoat matrix. The use of non-reactive organic salts can lower the electrical resistance of the topcoat by as much as one order of the magnitude. However, the salts have a tendency to migrate to the surface, causing haze or blooming problems. In addition, the salts may shed or wash off over time due to abrasion and exposure to the weather elements. Therefore, the salts should only be included in small amounts, e.g., about 1 to 2 wt%, or 5 wt%. Higher concentrations can be used and longer retention time can be achieved if the non-reactive organic salts are incorporated in semi-solid forms or provided with a mechanism or chemical compounds that trap the non-reactive organic salts in the polymeric matrix of the topcoat 105.

In another embodiment, the topcoat 105 is doped with a conductive metal oxide. The concentration of the conductive metal oxide that is used can vary depending on the type and particle size of the metal oxides. A topcoat having a high concentration of metal oxides may have increased hardness and therefore loses its resiliency. This will adversely impact the rain erosion and abrasion resistance properties of the topcoat. In addition, some conductive metal oxides have a limited resistance to UV light and humidity. They may also be photocatalytic and may degrade the organic coatings upon exposure to UV light. Therefore, in one embodiment, nanoparticles of ITO are used. ITO nanoparticles are less photocatalytic than other metal oxides, and their small particle size enable them to be used in higher concentrations without adversely impacting the resiliency and durability characteristics of the topcoat. Dispersions of nanoscale ITO particles are commercially available from Air Products Corporation under the product name "S2I," and from Evonik (product name "TC8DE," a 20 wt% ethanol ITO dispersion). In one embodiment, the topcoat 105 is doped with about 12 wt% of the ITO particles to get improved conductivity.

It is believed that needle-shaped ITOs can provide the needed conductivity without adversely impacting the resiliency of the topcoat 105. A needle-shaped ITO particle has a high aspect ratio and, as compared to spherical ITO particles, fewer particles per unit volume are required to obtain a desired level of conductivity. Other elongated particles such as carbon nano tubes can also be incorporated in the topcoat 105. Single or multiple-walled carbon nano tubes are conductive and are not prone to UV degradation. In addition, their size and shape allow them to be incorporated in the topcoat 105 in even smaller amounts to obtain a desired conductivity. In some embodiments, each carbon nano tube has a diameter of about 10 to about 20 nm and a length of about 1 to 50 mµ.

In an alternate embodiment, topcoat conductivity is achieved by incorporating an inherently conductive polymer (ICP) into the topcoat matrix. Conventional ICPs are prone to degradation upon exposure to UV light, and can lose their electrical conductivity. In addition, commercially available ICPs are often colored and only soluble in water, not organic solvents and resins. However, a new generation of ICPs, such as polythiophene-based conductive polymers, are transparent, compatible with organic solvents and resins, and more UV-resistant.

Regardless of the manner by which the multilayer stack is rendered conductive, it is advantageous to achieve a surface resistance of less than or equal to about 10⁹ Ω/□ or, more preferably, less than or equal to about 10⁵ Ω/□. The overall conductivity of the stack can be further enhanced by doping one or more layers of the secondary protective stack with a conductive agent (e.g., conductive metal oxide, quaternary ammonium salt, ICP, etc.), and/or by adding one or more additional conductive layers.

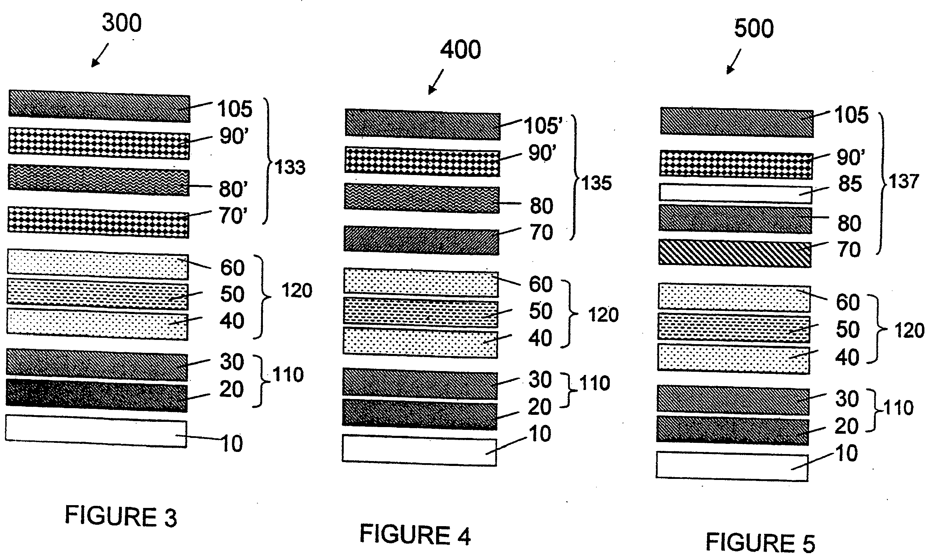

A second embodiment of the invention is shown in FIG. 3. A multilayer stack 300 includes a coated substrate 110, a primary conductive layer 120, and a modified secondary protective stack 133. The coated substrate and primary conductive layer are similar to those described above with reference to FIG 2. The modified secondary protective stack 133 includes first and second tie layers 70' and 90', a barrier layer 80', and a topcoat or top layer 105. In this embodiment, the tie layers 70' and 90' are doped with a conductive metal oxide, such as ITO nanoparticles. In one embodiment (using S2I nanoparticles), such a tie layer exhibited a measured resistance of 10⁵ Ω/□ to 10⁶ Ω/□. In another embodiment, the tie layer was loaded with 68 wt% TC8DE nanoparticles, and the measured resistance of the layer was 10⁴ Ω/□. Optionally, the barrier layer 80' is also conductive, and any charge that is applied to the multilayer stack 200 is likely to be transferred to and dissipated through the main conductive stack 120.

FIG 4 shows a third embodiment of the invention. A multilayer stack 400 includes a coated substrate 110, a primary conductive stack 120, and a secondary protective stack 135. The latter includes a tie layer 70 and barrier layer 80 as described above; a doped tie layer 90', and a doped topcoat or top layer 105. The tie layer 90' is loaded with about 68 wt% ITO nanoparticles, and the topcoat 105 is loaded with about 35 wt% quaternary ammonium salt. Each of these concentrations can be varied as desired to control the resulting conductivity of the doped layer or the overall secondary protective stack 135. In this embodiment, the risk of premature charring or burnout of the tie layer 90' is decreased, as a conductive path is provided that allows full static dissipation throughout the secondary protective stack 135.

FIG 5 shows another embodiment of the invention. A multilayer stack 500 includes a coated substrate 110, a primary conductive stack 120, and a secondary protective stack 137, the latter including a tie layer 70, a barrier layer 80 as described above, an additional metal oxide layer 85, and a doped tie layer 90'. In one embodiment, the metal oxide layer 85 is an ITO layer. The doped tie layer 90' is also doped with ITO particles or, alternatively, with another conductive material as described herein. In this embodiment, since all of the organic layers on top of the metal oxide layer 85 are conductive, any charge that is applied to the multilayer stack 500 is transmitted down to the conductive metal oxide layer 85, which allows the charge to be dissipated.

### Example 1

A polycarbonate canopy is prepared and then lightly abraded to increase its surface roughness and surface area for receiving a primer (3-aminopropyltriethoxy silane, an adhesion promoter). The primer is gravity coated onto the canopy. Next, a polymeric solution (FX-430, produced by PPG Industries, Inc., Pittsburg, PA) is applied to the canopy by flow coating. The polymeric solution is poured from the top of the canopy and from one end to another, allowing the solution to flow down and coat the canopy by gravity flow. Excess polymeric solution is allowed to flow down into a dripping pan and is collected for proper disposal.

After the entire outer surface of the canopy has been coated, it is cured in a heated oven at 220°F for 4 hours. After the coating is cured, the canopy is abraded to increase its surface area for receiving the next coating layer. The abraded canopy is dusted and wiped clean, and then cleaned with an excess of Isopropanol (IPA) and dried thoroughly. A silane basecoat is then applied by flow coating, followed by a layer of a base coat (FX-419, produced by PPG Industries, Inc.). The coated canopy is then cured in a preheated oven at a temperature of 190°F for 2 hours. After curing, the canopy is thoroughly cleaned to remove dust particles and particulates that may have accumulated on the surface.

The cleaned canopy is then placed in a vacuum chamber. The pressure in the vacuum chamber is reduced and the chamber is heated to 170°F. Two metal oxide layers and one metal layer are deposited on the coated canopy using magnetron sputtering. First, a layer of ITO is formed, and then the temperature is decreased to 90°F so that silver can be deposited onto the canopy. After a layer of silver is formed, a second layer of ITO is deposited on top of the silver layer while keeping the temperature of the chamber constant at 90°F. The canopy is then removed from the chamber and then cleaned to remove any contaminants that may adhere to the surface. Another primer coating (an adhesion promoter) and a second polymeric coating (FX-325, produced by PPG Industries, Inc.) are then applied. The coatings are cured and the surface is again abraded gently before receiving two additional primer coats (adhesion promoters one and two).

After the first adhesion promoter (FX-384) is dried, the canopy is primed with a second adhesion promoter (FX-408, produced by PPG Industries, Inc.). The surface is abraded again to receive a barrier coating (FX-426, produced by PPG Industries, Inc.). It is then cured, abraded again, and then cleaned thoroughly before another adhesion promoter (FX-408) and polymeric layer (FX-325) are applied. The canopy is then cured and abraded to receive another adhesion promoter. A topcoat (FX-422, produced by PPG Industries, Inc.) is then applied and allowed to cure.

### Comparative Example

A control sample is coated with various layers using the same method of flow coating, surface treatment, and curing described in Example 1. However, the control sample is only coated with an organic base coat followed by a sputtering process in which only one layer of silver and one layer of ITO are deposited. An acrylic solution is then applied over the ITO layer, followed by a topcoat.

The results of performance tests on Example 1 and the Comparative Example ("Control") are summarized in Table 1 below.

**Table 1. Test Performance**

| **Property** | | **Control** | **Ex. 1** |
|---|---|---|---|
| Light Transmission | % | 64-66 | 63-68 |
| Bayer Abrasion | % loss | 4.5 | <1 |
| Steam Resistance | hours | 0.5 | >24 |
| QUV Weathering | weeks | 4 | 12 |
| 4-Point Bend | cycles | 1-10 | 10-67 |
| Salt Fog + SO2 | days | 2 | >7 |
| Rain Erosion | % loss | 1-15 | 0 |

As can be seen in Table 1, Example 1 performed substantially better than the control in nearly every category. Although both samples have 100% adhesion at the beginning of the test, the QUV weathering test results indicate that Example 1 has better adhesion, as it has no signs of delamination until week number 12. Even after 12 weeks of exposure to QUV weathering, there are no signs of blue spot formation in Example 1. Conversely, the Control shows blue spots only after 1 week of QUV exposure. This indicates that the main conductive stack of Example 1 is well protected, as there are no signs of moisture penetrating to the metal layer.

Multilayer 400 performed significantly better in customer precipitation static testing.

Table 2 below shows apparent resistance measurements for various embodiments of multilayer stacks according to the invention. The apparent resistance is a resistance of the whole multilayer stack, measured at the top layer 100. The first line in Table 2 shows the apparent resistance measurements of three different multilayer stacks having a tie layer 90 that is not doped with any anti-static agent (i.e. ITO). However, each top layer 100 has a different concentration of anti-static agent. The first sample (i.e. row one and column one) has no anti-static agent and has a measured apparent resistance of 10¹² Ohm/square. The second sample (row one and column two), which has 22 wt% quaternary ammonium salt ("SS") in the top layer 100, has a measured apparent resistance of 10¹⁰ to 10¹¹ Ohm/square. The third sample (row one and column three), which has 35 wt% SS, has a measured apparent resistance of 10¹⁰ to 10¹¹ Ohm/square. The second line in Table 3 shows the apparent resistance measurements of three different multilayer stacks having a tie layer 90 that is doped with the same concentration of ITO and a top layer 100 doped with different concentrations of the anti-static agent (i.e. from 0 to 35 wt% SS).

As can be seen in the first column, there is no change in the apparent resistance when the top layer 100 is not doped with an anti-static agent, and the underlying tie layer 90 is doped with ITO. This is expected as the top layer 100 is not conductive. As an electrical current is applied to the top layer 100, the charge accumulates on the surface and cannot be transmitted anywhere, even when the underlying tie layer 90 is conductive. However, as the concentration of the anti-static agent increases, the apparent resistance decreases accordingly. The measured apparent resistance is further decreased as both layers are doped with high concentrations of anti-static agents (i.e., the sample in row two and column three has a measured apparent resistance of 10⁶ to 10⁷ Ohm/square, as compared to 10¹² Ohm/square for an un-doped sample shown in row one and column one).

**Table 2. Measured Resistance (Ohm/square) at the Top Layer 100**

| | Top Layer 100 | | |
|---|---|---|---|
| Tie Layer 90 | with no SS | with 22% SS | with 35% SS |
| With no anti-static agent | 10¹² | 10¹² - 10¹¹ | 10⁹ - 10¹⁰ |
| With anti-static agent (10⁴ Ω/square) | 10¹² | 10⁷ - 10⁸ | 10⁶ - 10⁷ |

| | | | |
|---|---|---|---|
| Note: SS = quaternary ammonium salt | | | |

Although various embodiments of the invention have been described, additional modifications and variations will be apparent to those skilled in the art. For example, the multilayer stack can have additional tie layers or primers, alternate thicknesses, additional components, etc. Also, as the individual layers that comprise the multilayer stack are formed, they can be cleaned before the next adjacent layer is deposited. For example, the canopy can be cleaned with a solvent such as acetone, and then dried to remove any surface water, which could cause premature crosslinking of the polysiloxane of the base layer 30. The invention is not limited to the embodiments specifically disclosed, and the multilayer stacks, their layers, and compositions may be modified without departing from the invention, which is limited only by the appended claims and equivalents thereof.

## Claims

1. An electrically conductive multilayer stack (200), comprising:
a coated substrate (110) comprising a substrate (10), a tie layer (20) disposed over the substrate (10), and a substrate base layer (30) disposed over the tie layer (20),
a conductive primary stack (120) containing at least one metal oxide layer (40, 60) and at least one metal layer (50), disposed over the coated substrate; and
a protective secondary stack (130) including at least one conductive layer (105), disposed over the conductive primary stack (120), **characterized in that** the substrate base layer (30) comprises an organopolysiloxane.

2. The multilayer stack of claim 1, wherein the substrate (10) is an aircraft canopy.

3. The multilayer stack of claim 1, wherein the organopolysiloxane is compounded with a silane or siloxane.

4. The multilayer stack of claim 1, wherein the conductive primary stack (120) comprises a first metal oxide layer (40), a metal layer (50) disposed over the first metal oxide layer (40), and a second metal oxide layer (60) disposed over the metal layer (50);
and optionally (a) wherein the first and second metal oxide layers (40, 60) are comprised of indium tin oxide, titanium dioxide, zinc oxide, or zinc stannate;
and optionally (b) wherein the first and second metal oxide layers (40, 60) comprise indium tin oxide;
and optionally (c) wherein the metal layer (50) comprises silver or a silver alloy;
and optionally (d) wherein the silver alloy comprises silver/palladium or silver/gold;
and optionally (e) wherein the metal layer (50) is coated with a layer of titanium.

5. The multilayer stack of claim 1, wherein the protective secondary stack (130) includes a first tie layer (70), a hydrophobic barrier layer (80) disposed over the first tie layer (70), a second tie layer (90) disposed over the barrier layer (80), and a conductive topcoat (105) disposed over the second tie layer (90).

6. The multilayer stack of claim 5, wherein the first tie layer (70) comprises a material compatible with a metal oxide and the barrier layer (80).

7. The multilayer stack of claim 5, wherein the second tie layer (90) comprises a material compatible with the barrier layer (80) and the topcoat (105).

8. The multilayer stack of claim 5, wherein the barrier layer (80) comprises a material selected from the group consisting of polyurethanes, fluorinated urethanes, fluoropolymers, fluoroelastomers, polyurethanes, polyolefins, polyamides, polyamines, halopolymers, ethylene propylene rubbers, epoxies, polyesters, and fluorosilicones.

9. The multilayer stack of claim 5, further comprising a primer coat between the first tie layer (70) and the barrier layer (80);
and optionally wherein the primer coat comprises 3-aminopropyltriethoxy silane.

10. The multilayer stack of claim 5, wherein the topcoat (105) comprises a polyurethane formed from a polyol, aliphatic polyisocyanate resin, diacetone alcohol, and a conductive agent;
and optionally (a) wherein the conductive agent comprises a quaternary ammonium salt, a conductive metal oxide, or an inherently conductive polymer;
and optionally (b) wherein the conductive agent comprises a quaternary ammonium salt;
and optionally (c) wherein the quaternary ammonium salt is provided in the topcoat at a concentration of from 22 to 60 wt%;
and optionally (d) wherein the quaternary ammonium salt concentration is 22 to 35 wt%;
and optionally (e) wherein the quaternary ammonium salt is provided in the topcoat (105) at a concentration of greater than or equal to 60 wt%.

11. The multilayer stack of claim 10, wherein the conductive agent comprises a non-reactive organic salt selected from the group consisting of 1-butyl-3-methylimidazolium methyl sulfonate, 1-butyl-3-methylimidazolium methyl sulfate, and 1-butyl-3-methylimidazolium ethyl sulfate;
and optionally wherein the non-reactive organic salt is present at a concentration of 1 to 5 wt%.

12. The multilayer stack of claim 5, wherein the conductive agent comprises a conductive metal oxide;
and optionally (a) wherein the conductive metal oxide comprises indium tin oxide;
and optionally (b) wherein the indium tin oxide is provided as nanoparticles.

13. The multilayer stack of claim 5, wherein the conductive agent comprises an inherently conductive polymer;
and optionally (a) wherein the inherently conductive polymer comprises a polythiophene-based polymer;
and optionally (b) wherein the polythiophene-based polymer is poly(3,4-ethylene dioxythiophene)-poly(styrene sulfonate).

14. The multilayer stack of claim 5, wherein the first tie layer (70), second tie layer (90), and/or barrier layer (80) contain a conductive agent selected from the group consisting of quaternary ammonium salts, conductive metal oxides, and inherently conductive polymers.

15. The multilayer stack of claim 5, wherein the first tie layer (70) contains a conductive metal oxide.

16. The multilayer stack of claim 5, wherein the second tie layer (90) contains a conductive metal oxide.

17. The multilayer stack of claim 5, wherein the barrier layer (80) contains a conductive metal oxide.

18. The multilayer stack of claim 5, wherein the conductive topcoat comprises a polyurethane formed from a diacetone alcohol solution of a polyol, aliphatic polyisocyanate resin, N-methylpyrrolidone, and a quaternary ammonium salt.

## Patentansprüche

1. Elektrisch leitfähiger, mehrschichtiger Stapel (200), der folgendes umfasst:
ein beschichtetes Substrat (110; das ein Substrat (10), eine über dem Substrat (10) angeordnete Haftvermittlungsschicht (20) und eine über der Haftvermittlungsschicht (20) angeordnete Substratgrundschicht (30) umfasst;
einen leitfähigen primären Stapel (120), der wenigstens eine Metalloxidschicht (40, 60) und wenigstens eine Metallschicht (50) enthält, die sich über dem beschichteten Substrat befindet; und
einen schützenden sekundären Stapel (130), der wenigstens eine leitfähige Schicht (105) aufweist, die sich über dem leitfähigen primären Stapel (120) befindet;
**dadurch gekennzeichnet, dass** die Substratbasisschicht (30) ein Organopolysiloxan umfasst.

2. Mehrschichtiger Stapel nach Anspruch 1, wobei das Substrat (10) ein Kabinendach eines Luftfahrzeugs ist.

3. Mehrschichtiger Stapel nach Anspruch 1, wobei das Organopolysiloxan vermischt ist mit einem Silan oder Siloxan.

4. Mehrschichtiger Stapel nach Anspruch 1, wobei der leitfähige primäre Stapel (120) eine erste Metalloxidschicht (40), eine über der ersten Metalloxidschicht (40) angeordnete Metallschicht (40) und eine über der Metallschicht (50) angeordnete zweite Metalloxidschicht (60) umfasst; und
wobei optional (a) die erste und die zweite Metalloxidschicht (40, 60) Indiumzinnoxid, Titandioxid, Zinkoxid oder Zinkstannat umfassen; und
wobei optional (b) die erste und die zweite Metalloxidschicht (40, 60) Indiumzinnoxid umfassen; und
wobei optional (c) die Metallschicht (50) Silber oder eine Silberlegierung umfasst; und
wobei optional (d) die Silberlegierung Silber-Palladium oder Silber-Gold umfasst; und
wobei optional (e) die Metallschicht (50) mit einer Titanschicht beschichtet ist.

5. Mehrschichtiger Stapel nach Anspruch 1, wobei der schützende sekundäre Stapel (140) eine erste Haftvermittlungsschicht (70), eine über der ersten Haftvermittlungsschicht (70) angeordnete hydrophobe Sperrschicht (80), eine über der Sperrschicht (80) angeordnete zweite Haftvermittlungsschicht (90) und eine über der zweiten Haftvermittlungsschicht (90) angeordnete leitfähige Deckschicht (105) umfasst.

6. Mehrschichtiger Stapel nach Anspruch 5, wobei die erste Haftvermittlungsschicht (70) ein Material umfasst, das mit einem Metalloxid und der Sperrschicht (80) kompatibel ist.

7. Mehrschichtiger Stapel nach Anspruch 5, wobei die zweite Haftvermittlungsschicht (90) ein Material umfasst, das mit der Sperrschicht (80) und der Deckschicht (105) kompatibel ist.

8. Mehrschichtiger Stapel nach Anspruch 5, wobei die Sperrschicht (80) ein Material umfasst, das ausgewählt ist aus der Gruppe bestehend aus Polyurethanen, fluorierten Urethanen, Fluorpolymeren, Fluorelastomeren, Polyurethanen, Polyolefinen, Polyamiden, Polyaminen, Halopolymeren, Ethylenpropylenkautschukarten, Epoxidharzen, Polyestern und Fluorsilikonen.

9. Mehrschichtiger Stapel nach Anspruch 5, wobei dieser ferner eine Grundierungsschicht zwischen der ersten Haftvermittlungsschicht (70) und der Sperrschicht (80) umfasst; und wobei die Grundierungsschicht optional 3-Aminopropyltriethoxysilan umfasst.

10. Mehrschichtiger Stapel nach Anspruch 5, wobei die Deckschicht (105) ein Polyurethan umfasst, gebildet aus einem Polyol, aliphatischem Polyisocyanatharz, Diacetonalkohol und einer leitfähigen Substanz; und
wobei optional (a) die leitfähige Substanz ein quaternäres Ammoniumsalz, ein leitfähiges Metalloxid oder ein inhärent leitfähiges Polymer umfasst; und
wobei optional (b) die leitfähige Substanz ein quaternäres Ammoniumsalz umfasst; und
wobei optional (c) das quarternäre Ammoniumsalz in der Deckschicht in einer Konzentration zwischen 22 und 60 Gew.-% vorgesehen ist; und
wobei optional (d) die Konzentration des quarternären Ammoniumsalzes zwischen 22 und 35 Gew.-% liegt; und
wobei optional (e) das quarternäre Ammoniumsalz in der Deckschicht (105) in einer Konzentration von größer oder gleich 60 Gew.-% vorgesehen ist.

11. Mehrschichtiger Stapel nach Anspruch 10, wobei die leitfähige Substanz ein nichtreaktionsfähiges organisches Salz ist, das ausgewählt ist aus der Gruppe bestehend aus 1-Butyl-3-methylimidazoliummethylsulfonat, 1-Butyl-3-methylimidazoliummethylsulfat und 1-Butyl-3-methylimidazoliumethylsulfat; und
wobei optional das nichtreaktionsfähige organische Salz in einer Konzentration von 1 bis 5 Gew.-% vorhanden ist.

12. Mehrschichtiger Stapel nach Anspruch 5, wobei die leitfähige Substanz ein leitfähiges Metalloxid umfasst; und
wobei optional (a) das leitfähige Metalloxid Indiumzinnoxid umfasst; und
wobei optional (b) das Indiumzinnoxid als Nanopartikel vorgesehen ist.

13. Mehrschichtiger Stapel nach Anspruch 5, wobei die leitfähige Substanz ein inhärent leitfähiges Polymer umfasst; und
wobei optional (a) das inhärent leitfähige Polymer ein Polymer auf Polythiophenbasis umfasst; und
wobei optional (b) das ein Polymer auf Polythiophenbasis Poly(3,4-ethylendioxythiophen)-poly(styrolsulfonat) ist.

14. Mehrschichtiger Stapel nach Anspruch 5, wobei die erste Haftvermittlungsschicht (70), die zweite Haftvermittlungsschicht (90) und/oder die Sperrschicht (80) eine leitfähige Substanz enthalten, die ausgewählt ist aus der Gruppe bestehend aus quarternären Ammoniumsalzen, leitfähigen Metalloxiden und inhärent leitfähigen Polymeren.

15. Mehrschichtiger Stapel nach Anspruch 5, wobei die erste Haftvermittlungsschicht (70) ein leitfähiges Metalloxid enthält.

16. Mehrschichtiger Stapel nach Anspruch 5, wobei die zweite Haftvermittlungsschicht (90) ein leitfähiges Metalloxid enthält.

17. Mehrschichtiger Stapel nach Anspruch 5, wobei die Sperrschicht (80) ein leitfähiges Metalloxid enthält.

18. Mehrschichtiger Stapel nach Anspruch 5, wobei die leitfähige Deckschicht ein Polyurethan umfasst, das aus einer Diacetonalkohollösung aus einem Polyol, aliphatischem Polyisocyanatharz, N-Methylpyrrolidon und einem quarternären Ammoniumsalz gebildet wird.

## Revendications

1. Empilement multicouche conducteur d'électricité (200), comprenant :
un substrat enduit (110) comprenant un substrat (10), une couche de liaison (20) disposé sur le substrat (10), et une couche de base de substrat (30) disposée sur la couche de liaison (20),
un empilement primaire conducteur (120) contenant au moins une couche d'oxyde métallique (40, 60) et au moins une couche métallique (50), disposées sur le substrat enduit ; et
un empilement secondaire protecteur (130) incluant au moins une couche conductrice (105), disposée sur l'empilement primaire conducteur (120),
**caractérisé en ce que** la couche de base de substrat (30) comprend un organopolysiloxane.

2. Empilement multicouche selon la revendication 1, dans lequel le substrat (10) est une verrière d'aéronefs.

3. Empilement multicouche selon la revendication 1, dans lequel l'organopolysiloxane est composé d'un silane ou d'un siloxane.

4. Empilement multicouche selon la revendication 1, dans lequel l'empilement primaire conducteur (120) comprend une première couche d'oxyde métallique (40), une couche métallique (50) disposé sur la première couche d'oxyde métallique (40), et une seconde couche d'oxyde métallique (60) disposé sur la couche métallique (50) ;
et éventuellement (a) dans lequel les premières et seconde couches d'oxyde métallique (40, 60) sont comprises d'oxyde d'étain-indium, de dioxyde de titane, d'oxyde de zinc, ou de stannate de zinc ;
et éventuellement (b) dans lequel les premières et seconde couches d'oxyde métallique (40, 60) comprennent de l'oxyde d'étain-indium ;
et éventuellement (c) dans lequel la couche métallique (50) comprend de l'argent ou un alliage d'argent ;
et éventuellement (d) dans lequel l'alliage d'argent est constitué d'argent/palladium ou d'argent/or ;
et éventuellement (e) dans lequel la couche métallique (50) est revêtue d'une couche de titane.

5. Empilement multicouche selon la revendication 1, dans lequel l'empilement secondaire protecteur (130) inclut une première couche de liaison (70), une couche de barrière hydrophobe (80) disposée sur la première couche de liaison (70), une seconde couche de liaison (90) disposée sur la couche de barrière (80), et une couche de finition conductrice (105) disposée sur la seconde couche de liaison (90).

6. Empilement multicouche selon la revendication 5, dans lequel la première couche de liaison (70) comprend un matériau compatible avec un oxyde métallique et avec la couche de barrière (80).

7. Empilement multicouche selon la revendication 5, dans lequel la seconde couche de liaison (90) comprend un matériau compatible avec la couche de barrière (80) et avec la couche de finition (105).

8. Empilement multicouche selon la revendication 5, dans lequel la couche de barrière (80) comprend un matériau choisi parmi le groupe constitué des polyuréthanes, des uréthanes fluorés, des fluoropolymères, des fluoroélastomères, des polyuréthanes, des polyoléfines, des polyamides, des polyamines, des halopolymères, des copolymères éthylène-propylène, des époxy, des polyesters, et des fluorosilicones.

9. Empilement multicouche selon la revendication 5, comprenant en outre une couche d'apprêt entre la première couche de liaison (70) et la couche de barrière (80) ;
et éventuellement dans lequel la couche d'apprêt comprend le 3-aminopropyltriéthoxy silane.

10. Empilement multicouche selon la revendication 5, dans lequel la couche de finition (105) comprend un polyuréthane formé à partir d'un polyol, d'une résine polyisocyanate aliphatique, d'une diacétone alcoolique, et d'un agent conducteur ;
et éventuellement (a) dans lequel l'agent conducteur comprend un sel d'ammonium quaternaire, un oxyde métallique conducteur, ou un polymère intrinsèquement conducteur ;
et éventuellement (b) dans lequel l'agent conducteur comprend un sel d'ammonium quaternaire ;
et éventuellement (c) dans lequel le sel d'ammonium quaternaire est fourni dans la couche de finition à une concentration comprise entre 22 et 60 % en poids ;
et éventuellement (d) dans lequel la concentration celle d'un quaternaire est comprise entre 22 et 35 % en poids ;
et éventuellement (e) dans lequel le sel quaternaire est fourni dans la définition (105) à une concentration supérieure ou égale à 60 % en poids.

11. Empilement multicouche selon la revendication 10, dans lequel l'agent conducteur comprend un sel organique non réactif choisi parmi le groupe constitué du méthylsulfonate de 1-butyl-3-méthylimidazolium, du méthylsulfate de 1-butyl-3-méthylimidazolium, et de l'éthylsulfonate de 1-butyl-3-méthylimidazolium ;
et éventuellement dans lequel le sel organique non réactif est présent dans une concentration comprise entre 1 et 5 % en poids.

12. Empilement multicouche selon la revendication 5, dans lequel l'agent conducteur comprend un oxyde métallique conducteur ;
et éventuellement (a) dans lequel l'oxyde métallique conducteur comprend de l'oxyde d'étain-indium ;
et éventuellement (b) dans lequel l'oxyde d'étain-indium est fourni en tant que nanoparticules.

13. Empilement multicouche selon la revendication 5, dans lequel l'agent conducteur comprend un polymère intrinsèquement conducteur ;
et éventuellement (a) dans lequel le polymère intrinsèquement conducteur comprend un polymère à base de polythiophène ;
et éventuellement (b) dans lequel le polymère à base de polythiophène est le poly (3,4-éthylène dioxythiophène)-poly (styrène sulfonate).

14. Empilement multicouche selon la revendication 5, dans lequel la première couche de liaison (70), la seconde couche de liaison (90), et/ou la couche de barrière (80) contiennent un agent conducteur choisi parmi le groupe constitué des sels d'ammonium quaternaires, des oxydes métalliques conducteurs, et des polymères intrinsèquement conducteurs.

15. Empilement multicouche selon la revendication 5, dans lequel la première couche de liaison (70) contient un oxyde métallique conducteur.

16. Empilement multicouche selon la revendication 5, dans lequel la seconde couche de liaison (90) contient un oxyde métallique conducteur.

17. Empilement multicouche selon la revendication 5, dans lequel la couche de barrière (80) contient un oxyde métallique conducteur.

18. Empilement multicouche selon la revendication 5, dans lequel la couche de finition conductrice comprend un polyuréthane formé à partir d'une solution de diacétone alcoolique, de résine de polyisocyanate aliphatique, de N-méthylpyrrolidone, et d'un sel d'ammonium quaternaire.
